# EUROPEAN PATENT SPECIFICATION

(11) **EP 0 986 863 B1**
(45) Date of publication and mention of the grant of the patent: **24.09.2008**
(21) Application number: 99905352.3
(22) Date of filing: 22.02.1999
(51) Int. Cl.: H04B 7/04, H04B 1/69

(54) **DEVICE AND METHOD FOR PROVIDING TIME SWITCHED TRANSMISSION DIVERSITY IN MOBILE COMMUNICATION SYSTEM**
EINRICHTUNG UND VERFAHREN ZUR ZEITSCHALTDIVERSITÄT IN EINEM MOBILEN ÜBERTRAGUNGSSYSTEM
DISPOSITIF ET TECHNIQUE PERMETTANT UNE TRANSMISSION EN DIVERSITE COMMUTEE DANS LE TEMPS DANS UN SYSTEME DE COMMUNICATION MOBILE

(30) Priority: 21.02.1998 KR 9805526
(43) Date of publication of application: 22.03.2000
(73) Proprietor: SAMSUNG ELECTRONICS CO., LTD., Suwon City, Kyungki-do 442-370 (KR)
(72) Inventor: KIM, Young, Ky, Patent Team, Seong-Nam shi, Kyungki-do, 463-050 (KR); AHN, Jae, Min, Kangnam-gu Seoul 135-230 (KR); YOON, Soon, Young, Patent Team, Seong-Nam shi, Kyungki-do, 463-050 (KR); MOON, Hi, Chan, Songpa-gu Seoul 138-140 (KR); HAN, Sang, Sung, Kunpo-shi Kyonggi-do 435-040 (KR)
(74) Representative: Grünecker, Kinkeldey, Stockmair & Schwanhäusser Anwaltssozietät
(86) International application number: PCT/KR1999/000083
(87) International publication number: WO 1999/043102

(56) References cited:
- EP-A- 0 740 430
- EP-A2- 0 744 841
- DE-A- 4 219 677
- US-A- 5 652 764

## Description

### BACKGROUND OF THE INVENTION

### 1. Field of the Invention

The present invention relates to a transmitting/receiving device and method with a diversity function, and in particular, to a device and method for transmitting/receiving data with a time switched transmission diversity (TSTD) function.

### 2. Description of the Related Art

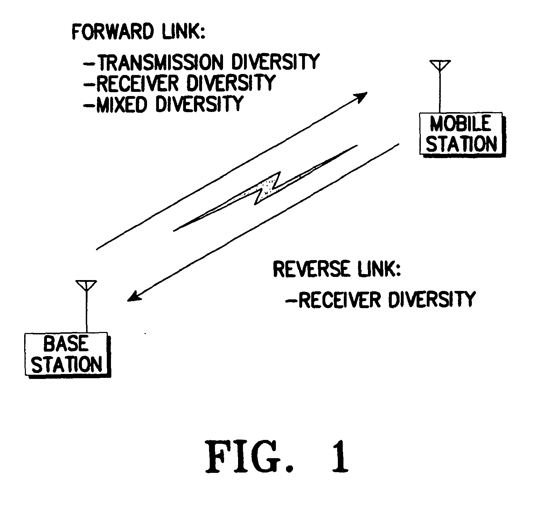

Data transmission/reception performance can generally be increased by a diversity technique in a mobile communication system under a fading environment. FIG. 1 is a view illustrating diversity techniques applicable to forward and reverse links in a mobile communication system.

Referring to FIG. 1, data can be transmitted on a reverse link with receiver diversity. To do this, a base station is equipped with a plurality of reception antennas. For a forward link, there are three diversity techniques: transmission diversity, receiver diversity, and mixed diversity. In transmission diversity, a base station transmits a signal through a plurality of transmission antennas and a mobile station receives the signal through a single reception antenna with the effect that might be obtained with plural reception antennas. Receiver diversity is provided when the mobile station has a plurality of reception antennas, and a mixed form of the transmission and reception diversity techniques is called a mixed diversity.

The reception diversity technique on the forward link, however, has the problem that diversity gain is small because the small size of a terminal limits the distance between reception antennas. Another problem is that use of plural reception antennas requires a separately procured hardware configuration for receiving a forward link signal and transmitting a reverse link signal through a corresponding antenna, thereby imposing constraints on the size and cost of the terminal. In view of these problems, the mobile communication system typically employs the transmission diversity technique on the forward link.

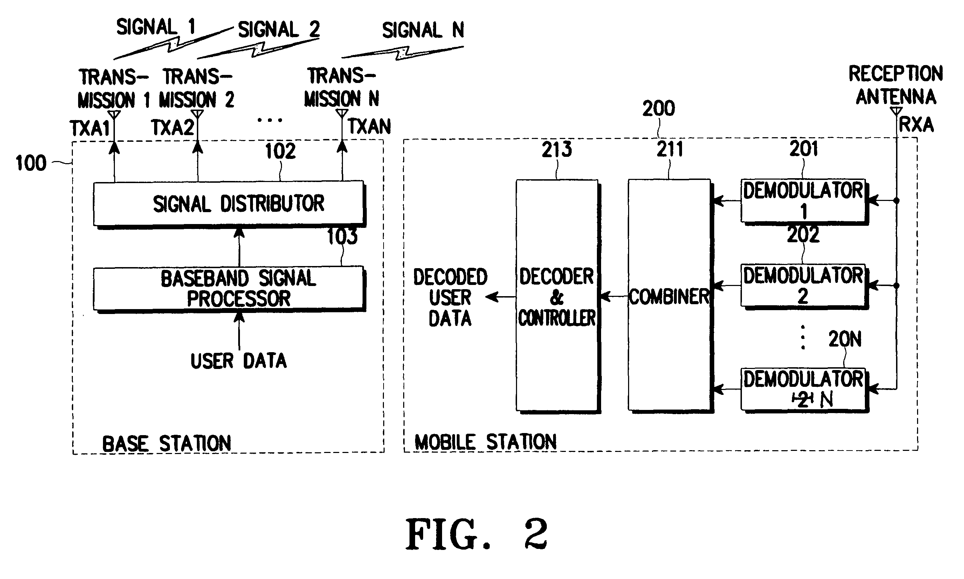

For the transmission diversity on a forward link, a base station and a mobile station in a mobile communication system have transmitting and receiving mechanisms, respectively, as shown in FIG. 2. In FIG. 2, a baseband signal processor 103 of a base station 100 converts user data for transmission on the forward link to a baseband signal. The process in the baseband signal processor 103 involves channel encoding, interleaving, orthogonal modulation, and PN (Pseudo Noise) spreading. A signal distributor 102 distributes a signal received from the baseband signal processor 103 to N transmission antennas TXA1 to TXAN. Hence, the transmission end of the base station 100 executes a transmission diversity through the N antennas.

A mobile station 200 has a single reception antenna RXA for receiving signals from the base station 100 through the N transmission antennas. To process the received signals, the terminal 200 includes N demodulators 201 to 20N corresponding to the N transmission antennas. A combiner 211 combines demodulated signals received from the demodulators 201 to 20N, and a decoder & controller 213 decodes a signal received from the combiner 211 to produce decoded user data.

In FIG. 2, the user data to be transmitted from the base station 100 to the mobile station 200 is encoded in the baseband signal processor 103 and divided into N streams in the signal distributor 102, and transmitted through the corresponding transmission antennas TXA to TXAN. Then, the mobile station 200 demodulates the signals received through the single reception antenna RXA in the N demodulators 201 to 20N as many as the transmission antennas TXA1 to TXAN and combines the demodulated signals, thereby obtaining diversity gain.

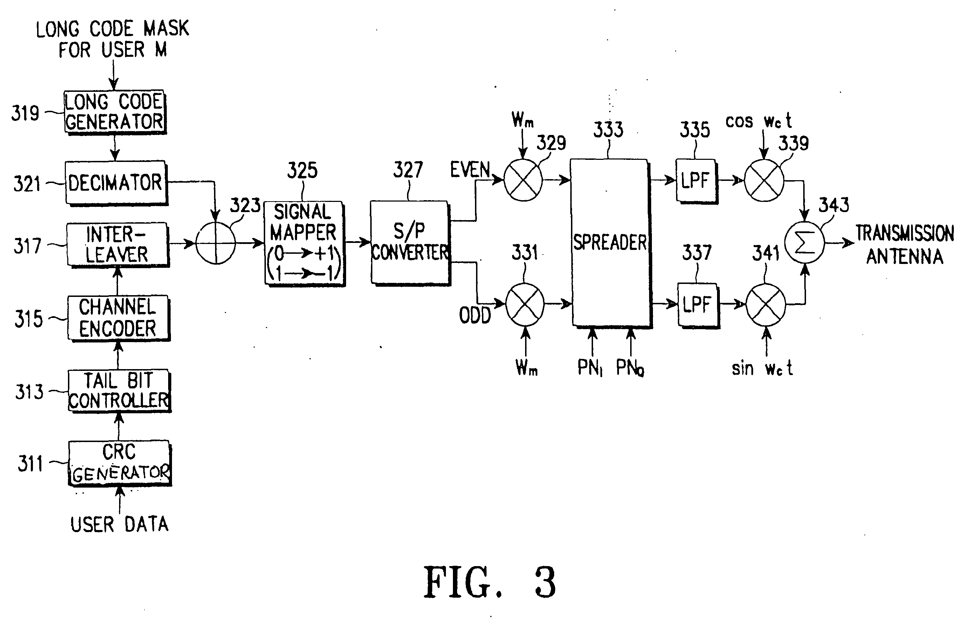

Now, the structure of a transmitter in a non-transmission diversity (NTD) CDMA communication system will be described. Referring to FIG. 3, the NTD in a base station includes a CRC (Cyclic Redundancy Check) generator 311 for adding CRC bits to input user data in order to detect a frame error which occurs while sending the user data. A tail bit generator 313 adds tail bits indicating termination of a data frame to the data frame prior to channel encoding. Then, a channel encoder 315 encodes the data frame for error correction and an interleaver 317 interleaves the encoded data. A combiner 323 exclusive-ORs the interleaved data with a long code sequence. This long code sequence is generated in a long code generator 319 and decimated in a decimator 321 at the same rate as that at an output terminal of the interleaver 317. A signal mapper 325 converts 0s and 1s of the encoded data received from the combiner 323 to +1s and -Is respectively, for orthogonal modulation. A serial-to-parallel (S/P) converter 327 divides the signal received from the signal mapper 325 into I channel and Q channel streams, for QPSK (Quadrature Phase Shift Keying) modulation. The I channel and Q channel streams are subject to orthogonal modulation in multipliers 329 and 331 and PN spreading in a PN spreader 333. The spread signal is filtered for pulse shaping in LPFs (Low Pass Filters) 335 and 337, loaded on a carrier, and finally transmitted through a transmission antenna.

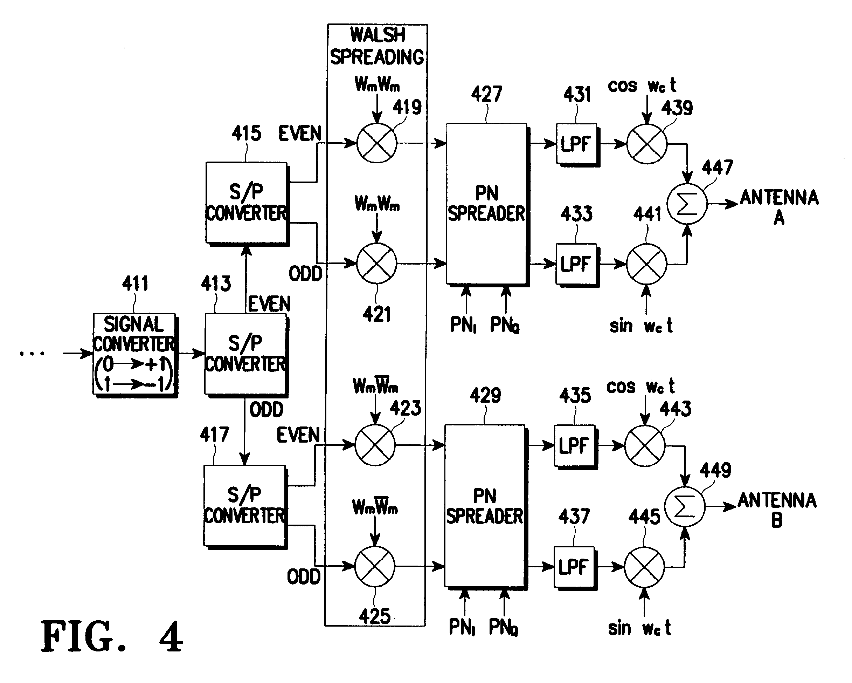

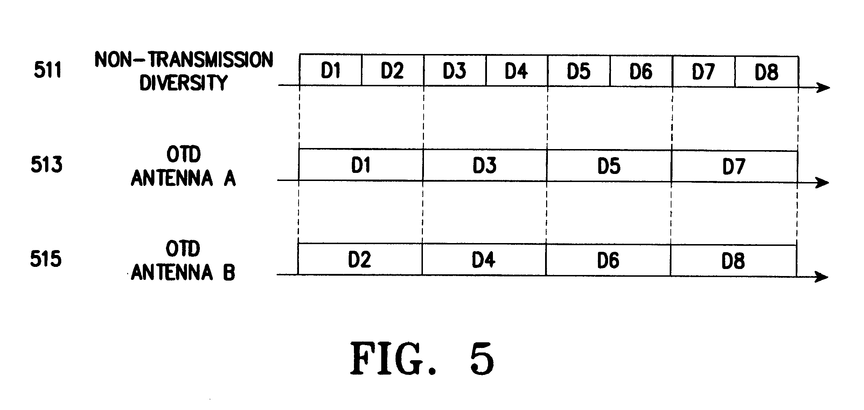

The transmit signal output from the NTD transmitter in a base station shown in FIG. 3 has a structure indicated by 511 of FIG. 5. FIG. 5 illustrates timing characteristics of user data output from the NTD transmitter and from an orthogonal transmission diversity (OTD) transmitter with two antennas (N=2). An OTD transmitter was exploited as shown in FIG. 4 to improve the performance of a forward link channel in an NTD CDMA mobile communication system. In the OTD transmitter, information for one user branches into two or more streams and is transmitted through different transmission antennas, as indicated by 513 and 515.

FIG. 4 is a block diagram of an OTD transmitter with two transmission antennas (N=2), for example, for a base station in a mobile communication system. The following description is conducted with the understanding that [**W**ₘ - **W**ₘ] is identical to [**W**ₘ W̅ₘ̅].

Referring to FIG. 4, the OTD transmitter operates in the same manner as the NTD transmitter of FIG. 3, except for a serial-to-parallel conversion process. In the OTD structure, mapped data branches into N streams as many as the transmission antennas in S/P converters 413, 415, and 417, and orthogonally modulated in multipliers 419, 421, 423, and 425, for maintaining mutual orthogonality between the transmission antennas.

Besides the orthogonal modulation, orthogonal codes should be extended to ensure the mutual orthogonality among the antennas. The orthogonal code extension is accomplished by Hadamard matrix extension. In the case of the OTD transmitter with two transmission antennas A and shown in FIG. 4, different orthogonal codes assigned to the antennas are [**W**ₘ **W**ₘ] and [**W**ₘ-**W**ₘ] extended from an orthogonal code **W**ₘ of a length 2^{m} used in the NTD transmitter. The purpose of orthogonal code extension is to compensate for a data rate of each of the N streams, which is an 1/N of the data rate prior to serial-to-parallel conversion.

A receiver for receiving a signal from such an OTD transmitter requires signal demodulators for demodulating user data, a pilot demodulator for providing timing and phase information needed in the signal demodulators, and a parallel-to-serial (F/S) converter for converting N-signal demodulator outputs to a serial signal stream.

A pilot channel is used for a base station to provide timing and phase information to a mobile station. The mobile station first activates the pilot demodulator to acquire necessary information and demodulates user data based on the acquired information. Each transmission antenna should be assigned a pilot channel.

In the receiver corresponding to the conventional OTD transmitter of FIG. 4, the pilot demodulator subjects a received signal to PN despreading and orthogonal demodulation and integrates the resulting signal for one cycle in order to demodulate a pilot channel from the received signal. A time estimator and a phase estimator in the pilot demodulator estimate timing and phase values from the integrated value.

A signal demodulator of the receiver performs PN despreading on a user data signal based on the timing information received from the pilot demodulator. A phase error which occurs during transmission is compensated for by multiplying the phase information by an integrated value resulting from integrating an orthogonally modulated signal for one cycle. The phase-compensated integrator output is converted to a probability value by a soft decision block and fed through the P/S converter to a deinterleaver.

Despite improvement of reception performance as compared to the NTD system, the conventional OTD mobile communication system, however, has the following problems.

First of all, a terminal should be equipped with pilot demodulators and signal demodulators, each as many as transmission antennas of a base station. This increases the complexity, cost, and power consumption of a receiver.

Another problem is that the length of an orthogonal code used is increased by N times from that of an NTD case, for N transmission antennas. Therefore, an integration interval is extended, degrading the reception performance in a frequency error-susceptible channel environment.

Further, the number of available transmission antennas is limited to 2ⁿ. In other words, the number of transmission antennas is a power of 2, increased to 2, 4, 8, 16,... in this order, which imposes constraints on several applications including an antenna array.

DE 42 19 677 discloses a base station comprising at least two transmit antennas, at least two modulators each connected to one transmit antenna, a coder to produce a sequence of correlated symbols, an interleaver that spreads in time the sequence of correlated symbols, and a switch which supplies alternately the output of the interleaver to said at least two transmit antennas either on symbol-basis or on block-basis. In case the switching is on block-basis, the symbols are interleaved (time-spread) with an interleaving-depth equal to the block length.

EP 0 740 430 refers to a diversity radio communication system comprising on both the transmitting and the receiving side an antenna switch circuit for selecting an antenna among a plurality of transmitting antennas and connecting the selected transmitting/receiving antenna to a transmission/receiving circuit. The transmitting and receiving antenna switch procedures do not need to be synchronous.

EP 0 744 841 refers to an apparatus for transmission of burst signals using time diversity and antenna switching comprising encoding means for generating an encoded bit signal, interleave means for interleaving an encoded output over a plurality of burst signals, a modulator for modulating interleaved burst signals and an antenna switcher for sequentially selectively supplying an output signal to the antennas for each of the burst signals.

It is an object of the present invention to provide a TSTD (Time Switched Transmission Diversity) device in which a transmit signal of a base station is distributed to a plurality of antennas by time switching and to also provide a receiver for receiving a signal from a TSTD transmitter.

A further object of the present invention is to provide a TSTD communication device and method in a mobile communication system, in which the length of an orthogonal code is not changed.

Still another object of the present invention is to provide a receiver and a receiving method in a TSTD mobile communication system, in which a single signal demodulator is offered regardless of the number of transmission antennas.

Yet another object of the present invention is to provide a transmitter and a transmitting method in a TSTD mobile communication system, in which the number of transmission antennas can be easily increased.

The corresponding objects are solved by the features of the independent claims.

Advantageous embodiments of the invention are disclosed in the dependent claims.

### BRIEF DESCRIPTION OF THE DRAWINGS

The above objects and advantages of the present invention will become more apparent by describing in detail preferred embodiments thereof with reference to the attached drawings in which:
FIG. 1 is a view illustrating diversity techniques on forward and reverse links in a mobile communication system;
FIG. 2 is a block diagram of a transmission diversity-based device on a forward link in a mobile communication system;
FIG. 3 is a block diagram of an NTD transmitter in a mobile communication system;
FIG. 4 is a block diagram of a conventional OTD transmitter in a mobile communication system;
FIG. 5 illustrates the structures of data transmitted from the transmitters shown in FIGs. 3 and 4;
FIG. 6 is a block diagram of a TSTD transmitter in a mobile communication system according to an embodiment of the present invention;
FIG. 7 is a block diagram of a controller shown in FIG. 6;
FIG. 8 is a view illustrating timing characteristics of data transmitted in a periodic pattern from the TSTD transmitter of FIG. 6;
FIG. 9 is a view illustrating timing characteristics of data transmitted in a random pattern from the TSTD transmitter of FIG. 6;
FIG. 10 is a view illustrating timing characteristics of data for plural users synchronously transmitted from the TSTD transmitter of FIG. 6;
FIG. 11 is a view illustrating timing characteristics of data for plural users asynchronously transmitted from the TSTD transmitter of FIG. 6;
FIG. 12 is a view referred to for describing extensibility of transmission antennas in number in the TSTD transmitter of the mobile communication system according to the embodiment of the present invention;
FIG. 13 is a block diagram of an embodiment of a receiving deice for receiving data from a TSTD transmitting device in the mobile communication system according to the present invention; and
FIG. 14 is a block diagram of another embodiment of a receiving device for receiving data from a TSTD transmitting device in the mobile communication system according to the present invention.

### DETAILED DESCRIPTION OF THE PREFERRED EMBODIMENTS

A mobile communication system according to an embodiment of the present invention distributes user data to a plurality of antennas by time switching on a transmission side to achieve a transmission diversity, and demodulates the time diversity-based signal in a single signal demodulator on a reception side. The features of time diversity according to the present invention lie in:
(1) A signal demodulator is given for demodulating user data regardless of the number N of transmission antennas. That is, only one orthogonal code is available to a user, which enables simplification of a receiver and low power dissipation and low cost of a terminal;
(2) The length of an orthogonal code is the same as that of an orthogonal code used in an NTD device, regardless of the number N of transmission antennas. This implies that there is no increase of an integration interval which is involved in providing time diversity; and
(3) The number of available transmission antennas is not limited to 2ⁿ but limitlessly extensible, thereby imposing no constraints on other applications.

Prior to a description in structure and operation of a transmitter in a base station and a receiver in a terminal according to the embodiment of the present invention, it is to be noted that a TSTD scheme of implementing a time diversity on transmission antennas by time switching is applied to a forward link in a mobile communication system of the present invention.

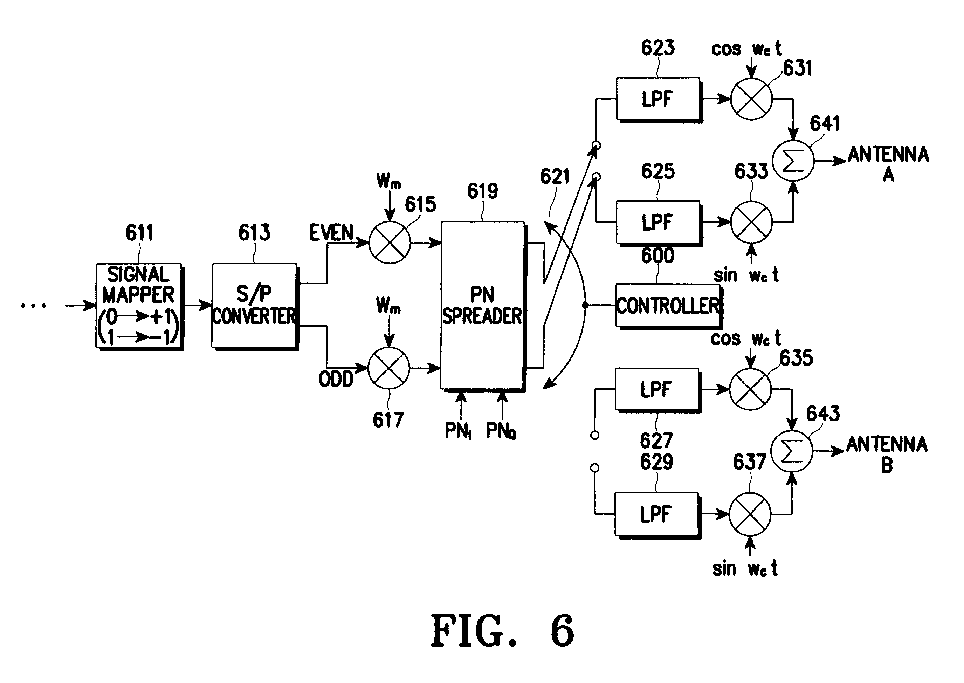

FIG. 6 is a block diagram of a TSTD transmitter with two (N=2) transmission antennas in a base station according to the present invention.

Referring to FIG. 6, a signal mapper 611 receives a signal resulting from combining encoded user data with a long code and changes the level of the received signal by converting 0s and 1s to +1s and - 1s, respectively. An S/P converter 613 converts a serial signal received from the signal mapper 611 to an odd-numbered signal and an even-numbered signals. A multiplier 615 multiplies the even-numbered signal by an orthogonal code **W**ₘ and a multiplier 617 multiplies the odd-numbered signal by an orthogonal code **W**ₘ. These multipliers 615 and 617 function to subject a user signal to orthogonal modulation (or orthogonal spreading) by multiplication. The orthogonal code can be a Walsh code. A PN spreader 619 multiplies the orthogonally modulated signals received from the multipliers 615 and 617 by corresponding PN sequences PN_{I} and PN_{Q}, for PN spreading (or PN masking) of a signal to be transmitted.

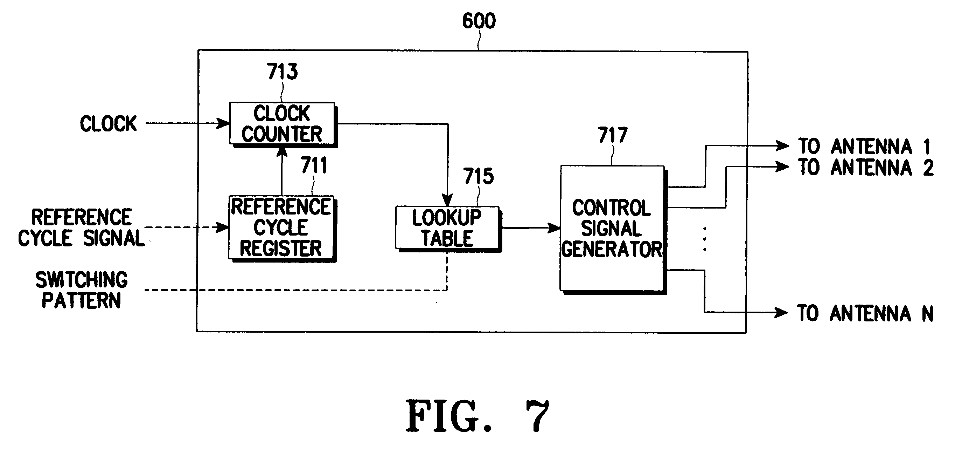

A controller 600 generates a switch controlling signal for distributing a transmit signal to a plurality of antennas in the TSTD transmitter of the present invention. The controller 600 synchronizes to a GPS (Global Positioning System) signal in a synchronous mode and a switching cycle is an integer multiple of the orthogonal code length. In addition, a look-up table for storing switching information with respect to a hopping pattern should be provided to the controller 600 in the case of implementing the time switching in a specific pattern. The controller 600 is configured in FIG. 7 and a description of its operation will be given later. A switch 621 switches based on the output of the controller 600, and has a common terminal coupled to output terminals of the PN spreader 619 from which I channel and Q channel spread signals are transmitted, a first output terminal coupled to LPFs 623 and 625, and a second output terminal coupled to LPFs 627 and 629. The switch 621 switches based on a switch controlling signal received from the controller 600 and selectively outputs the spread signals received from the PN spreader 619 to the LPFs 623 and 625 or to the LPFs 627 and 629.

The LPFs 623 and 625 low-pass-filter the I channel and Q channel PN spread signals received from the switch 621. Multipliers 631 and 633 multiply outputs of the LPFs 623 and 625 by carriers, for frequency upconversion. An adder 641 adds signals received from the multipliers 631 and 633 and sends the resulting signal to a transmission antenna A.

The LPFs 627 and 629 low-pass-filter the I channel and Q channel PN spread signals received from the switch 621. Multipliers 635 and 637 multiply outputs of the LPFs 627 and 629 by carriers, for frequency upconversion. An adder 643 adds signals received from the multipliers 63 1 and 633 and sends the resulting signal to a transmission antenna B.

The structure shown in FIG. 6 can be adapted as a forward channel transmitter in the TSTD base station. Forward channel transmitters include a pilot channel transmitter, a sync channel transmitter, a control channel transmitter, and a traffic channel transmitter. Considering that a pilot channel provides time synchronization for transmission of data on a forward link, the pilot channel transmitter can be configured to be an OTD structure, while the other channel transmitters can use the TSTD structure shown in FIG. 6.

FIG. 7 is a block diagram of the controller 600 shown in FIG. 6. Referring to FIG. 7, a reference cycle register 711 stores a reference cycle signal received from an upper-level processor. The reference cycle signal acts as a time switching cycle in a channel transmitter. A clock counter 713 receives clock pulses from a base station system, counts the clock pulses in a reference cycle unit, and generates read pulses. A look-up table 715 stores switching pattern information received from the upper-level processor and outputs corresponding switching information in response to the read pulses received from the clock counter 713. A control signal generator 717 generates a switch controlling signal for distributing a PN spread signal to a plurality of transmission antennas according to the pattern information read from the look-up table 715.

By way of example, the controller 600 of FIG. 7 functions to switchingly connect a baseband transmit output to N antennas by periods in a TSTD base station transmitter. The reference cycle register 711 stores a time switching cycle for a channel so that each channel can be time-switched differently. That is, designating a different reference cycle signal for each channel in the reference cycle register 7.1 results in transmission of each channel in a different switching cycle. The value stored in the reference cycle register 711 is designated separately for each channel in the upper-level processor prior to transmission of the channel, and can be changed during data transmission under a separately determined control.

The clock pulses input to the clock counter 713 are provided from the base station system, synchronized to a reference time in the base station, and have a clock cycle proportional to an orthogonal code length. The clock counter 713 counts the clock pulses, compares the counted value with the value stored in the reference cycle register 711, and sends read pulses to the look-up table 715 at the time point when the values are equal.

The look-up table 715 is a memory for storing a time switching pattern of data transmitted through the N transmission antennas. A different switching pattern can be assigned to each channel, or channels can share the same switching pattern. The switching pattern stored in the look-up table 715 is to be transmitted from the base station to the terminal to allow the terminal to demodulate data based on the switching pattern.

The control signal generator 717 analyses the switching pattern read from the look-up table 715 and controls signal paths to the N transmission antennas. That is, only one selected transmission antenna is enabled and the other transmission antennas are disabled.

Hence, the controller 600 counts input clock pulses, compares the counted value with a reference cycle value, and generates a read signal corresponding to a switching pattern stored in the look-up table 715 if the values are equal. Here, the switching pattern is information used to select a transmission antenna in a subsequent step. The thus-obtained switching information is changed to an enable/disable signal for each transmission path.

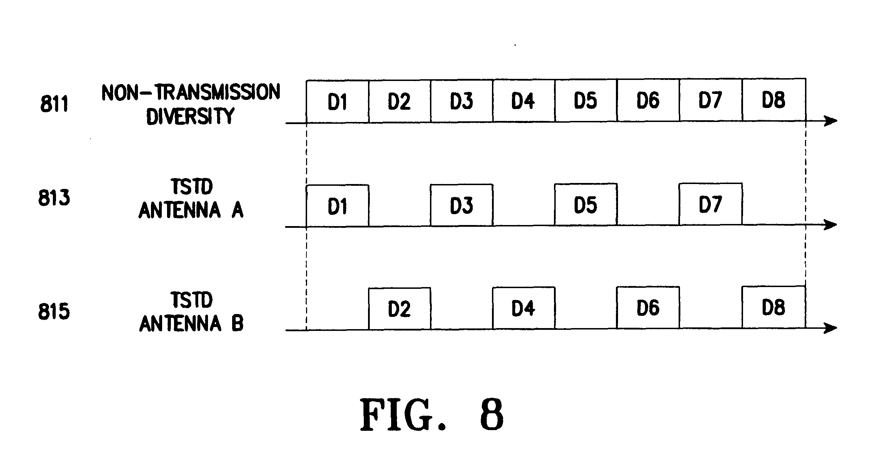

FIG. 8 is a view illustrating a comparison between characteristics of signals transmitted from an NTD transmitter and the TSTD transmitter shown in FIG. 6. In FIG. 8, reference numeral 811 denotes an output timing of the NTD transmitter. Reference numerals 813 and 815 denote the timings of signals respectively transmitted through the transmission antennas A and B in the TSTD transmitter.

In operation, the TSTD transmitter uses one orthogonal code assigned to a corresponding user, as compared to the OTD transmitter requiring orthogonal codes as many as transmission antennas, and follows the same process as the NTD transmitter, up to PN spreading. Then, PN spread data is switched to each transmission antenna in a cycle equal to an integer multiple of an orthogonal code length, in a periodic pattern indicating sequential transmission of data to the N transmission antennas or in a random pattern. Which time switching pattern to use is determined by the output of the look-up table 715 in the controller 600, and a time switching cycle is determined by a reference cycle value stored in the reference cycle register 711.

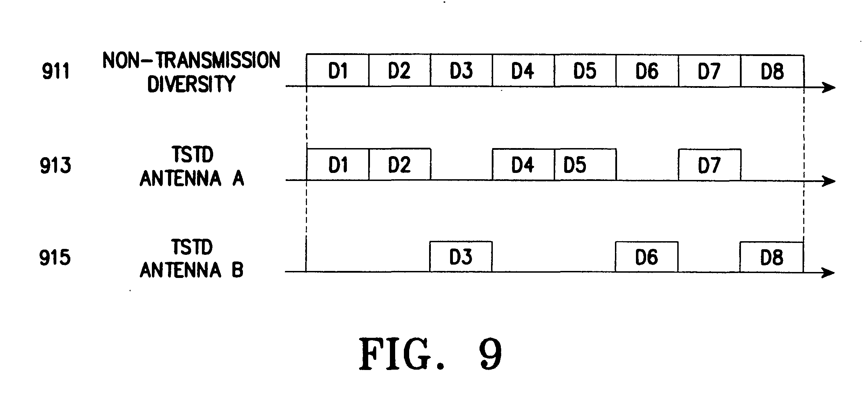

The time switching scheme can take a random pattern as shown in FIG. 9 as well as a periodic pattern as shown in FIG. 8. That is, if the look-up table 715 is loaded with a switching pattern requiring that data should be connected to the transmission antenna A consecutively twice and then to the transmission antenna B once in the TSTD transmitter of FIG. 6, the controller 600 controls the switch 621 to connect the output of the PN spreader 619 to the LPFs 623 and 625 for two switching cycles and to the LPFs 627 and 629 for one switching cycle. As a result, the timings of signals output from the transmission antennas A and B are shown as indicated by 913 and 915 of FIG. 9, respectively. Time switching in the random pattern can additionally offer the data scrambling effect.

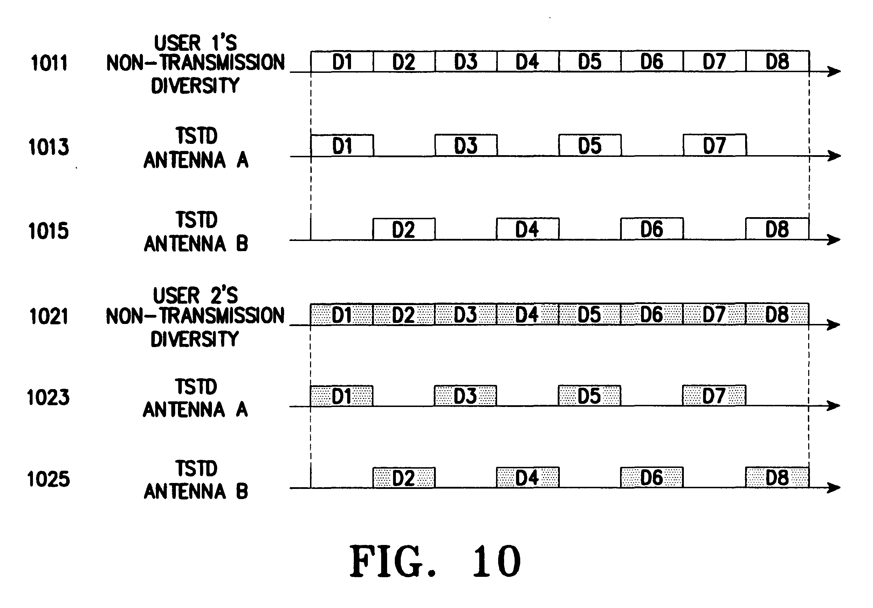

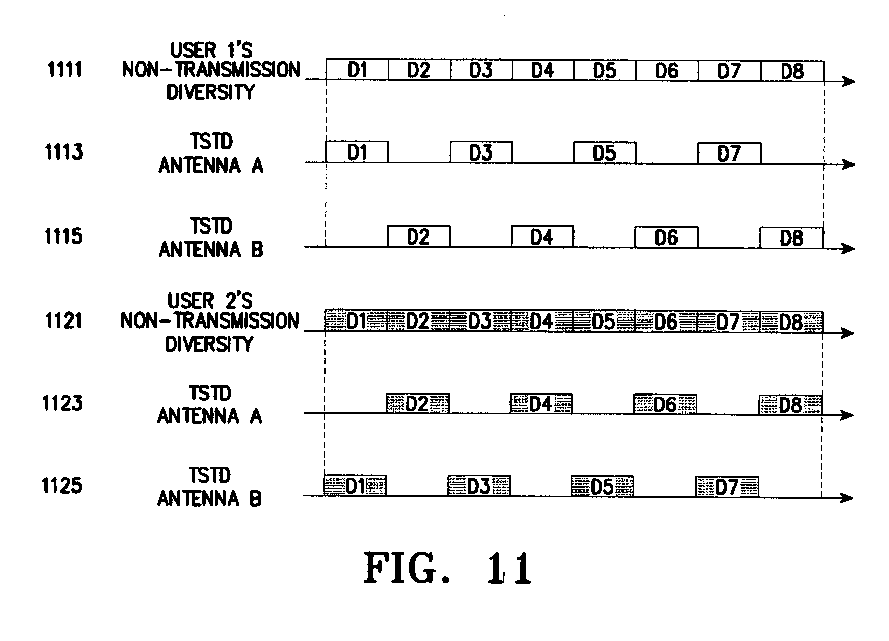

FIG. 10 is a timing diagram of user data under the condition that N=2, two users, and synchronous time switching in the TSTD transmitter of a base station, and FIG. 11 is a timing diagram of user data under the condition that N=2, two users, and asynchronous time switching in the TSTD transmitter. Synchronous time switching is discriminated from asynchronous time switching depending upon whether an identical time switching scheme or different time switching schemes are applied to all terminals for a base station.

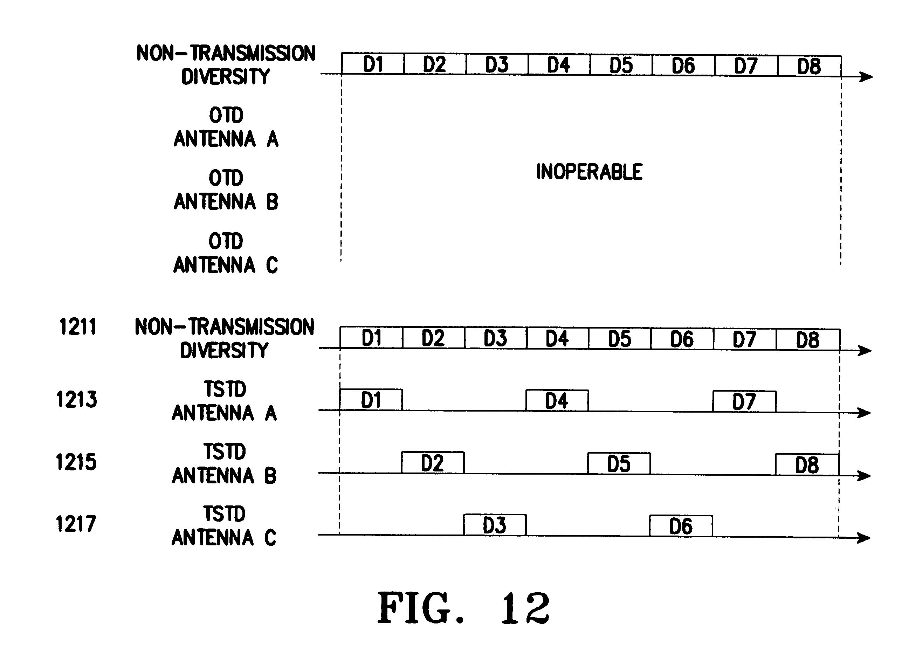

The TSTD technique of the present invention overcomes the conventional limitation encountered with the OTD technique. Because of assignment of one orthogonal code to a user, a receiver may demodulate all user data signals in a single demodulator regardless of the number of transmission antennas. Furthermore, use of the same orthogonal code as that in the NTD transmitter brings about no extension of an integration interval. While the number of transmission antennas is limited to 2ⁿ in the OTD transmitter, it is limitless (N is an integer) in the present invention. FIG. 12 is a timing diagram of user data transmitted from the TSTD transmitter and the OTD transmitter in comparison, with N of 3 and a periodic pattern. As shown in the drawing, the TSTD transmitter can afford time diversity with three transmission antennas, which is impossible in the OTD one.

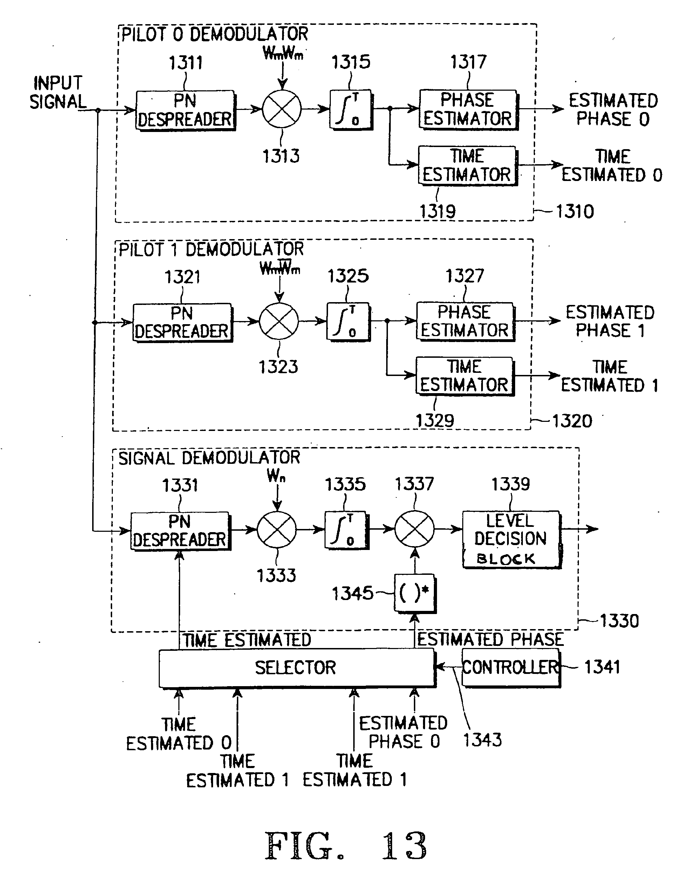

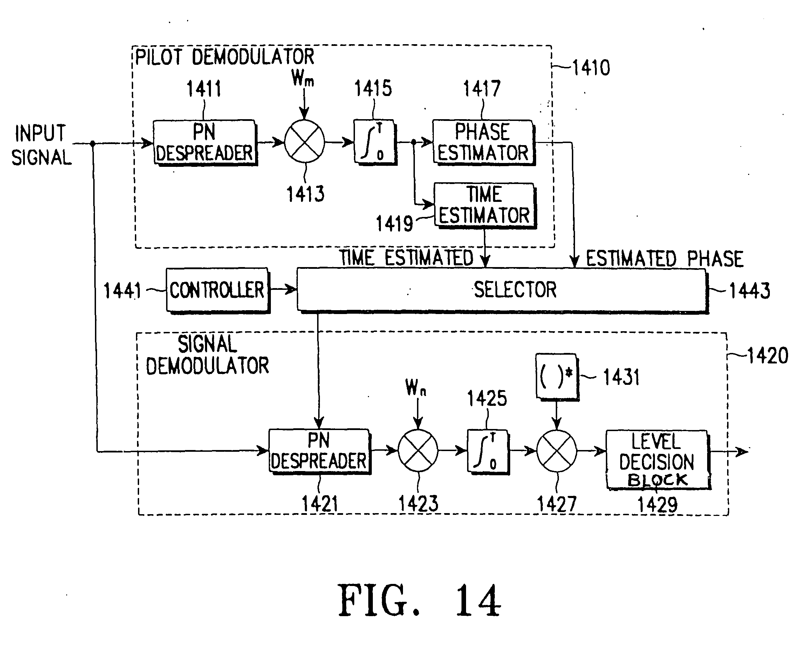

There may be two types of receiving devices for a terminal corresponding to a TSTD transmitting device. In one type, OTD is applied to a pilot channel and TSTD to the other channels. In the other type, TSTD is applied to all channels including a pilot channel and user data channels. FIGs. 13 and 14 are block diagrams of such two types of receiving devices. Because the pilot channel is a common channel for supporting synchronous demodulation in a terminal, either OTD or TSTD with a predetermined cycle and pattern can be rendered to transmission of the pilot channel.

FIG. 13 is a block diagram of a receiving device for receiving a signal from a transmitting device having two transmission antennas, a TSTD traffic channel transmitter, and an OTD pilot channel transmitter. Referring to FIG. 13, the receiving includes pilot channel receivers as many as the transmission antennas of the transmitting device. The pilot channel receivers should use orthogonal codes extended in length proportionally to the number of the transmission antennas. In FIG. 13, two pilot channel receivers 1310 and 1320 are provided due to two transmission antennas. An input signal is a baseband signal.

In the pilot channel receiver 1310, a PN despreader 1311 multiplies an input signal by a PN sequence, for PN despreading. A multiplier 1313 orthogonally demodulates the signal received from the PN despreader 1311 by multiplying the received signal by the same orthogonal code [**W**ₘ **W**ₘ] as one used in the pilot channel transmitter. An integrator 1315 integrates a signal received from the multiplier 1311 for a time T and sums the integrated values. A phase estimator 1317 analyses a signal received from the integrator 1315 and outputs an estimated phase value 0 of the pilot signal received through the transmission antenna A. A time estimator 1319 analyses the signal received from the integrator 1315 and outputs an estimated time value 0 as the transmission time of the pilot signal received through the transmission antenna A.

In the pilot channel receiver 1320, a PN despreader 1321 multiplies the input signal by a PN sequence, for PN despreading. A multiplier 1323 orthogonally demodulates the signal received from the PN despreader 1321 by multiplying the received signal by the same orthogonal code [**W**ₘ W̅ₘ̅] as the other used in the pilot channel transmitter. An integrator 1325 integrates a signal received from the multiplier 1321 for a time T and sums the integrated values. A phase estimator 1327 analyses a signal received from the integrator 1325 and outputs an estimated phase value 1 of the pilot signal received through the transmission antenna B. A time estimator 1329 analyses the signal received from the integrator 1325 and outputs an estimated time value 1 as the transmission time of the pilot signal received through the transmission antenna B.

A controller 1341 synchronizes to a reference time of the base station and generates a control signal for selecting the outputs of the pilot channel receivers 1310 and 1320 in a time switching cycle unit. A selector 1343 selectively outputs the estimated phase and time values received from the pilot channel receivers 1310 and 1320 on the basis of the control signal of the controller 1341.

In a traffic channel receiver 1330, a PN despreader 1331 multiplies an input signal at a transmission time position indicated by the time signal received from the selector 1343 by a PN sequence. That is, the PN despreader 1331 despreads the input signal by the PN code at the estimated switching time position. A multiplier 1333 multiplies the orthogonal code [**W**ₙ] used in the traffic channel transmitter by a signal received from the PN despreader 1331. An integrator 1335 integrates a signal received from the multiplier 1333 for the time T and sums the integrated values. A phase sign converter 1345 changes the sign of the phase value received from the selector 1343. A multiplier 1337 multiplies the output of the integrator 1335 by the output of the phase sign converter 1345, to synchronize the phase of the input signal. A level decision block 1339 detects the level of a signal received from the multiplier 1337 and changes the signal level to a gray level. The signal output from the level decision block 1339 is fed to a decoder in the receiver.

The receiving device shown in FIG. 13 includes pilot channel demodulators as many as the N transmission antennas, here, two antennas. These pilot channel receivers are the same as OTD ones in configuration and operation. On the other hands, there is given the single traffic channel receiver 1330 because of modulation of user data distributed to the transmission antennas using an identical orthogonal code.

The estimated time and phase information for the N transmission antennas is selectively provided from the pilot channel receivers 1310 and 1320 to the traffic channel receiver 1330 by the selector 1343 based on the clock signal of the controller 1341 synchronized to the base station. That is, the terminal obtains switching cycle and pattern information from the base station during a call set-up.

The controller 1341 obtains a current switching scheme applied to the system by demodulating a sync channel based on time and phase information pilot obtained from a demodulated pilot channel and analysing information loaded on the demodulated sync channel. Upon detection of the switching scheme for TSTD in a receiving device, the terminal can be synchronized to the base station in terms of time switching.

The traffic channel receiver 1330 subjects a user data signal to PN despreading using the estimated time value selectively received from the selector 1343 and orthogonally demodulates the PN spread signal. Then, it integrates the orthogonal modulation signal for one cycle, and multiplies the integrated value by a value obtained from converting the sign of phase information selected by the selector 1343, to thereby compensate for a phase error which occurs during data transmission. The phase-compensated integrator output is subjected to soft decision and converted to a probability value in the level decision block 1339 and fed through a P/S converter (not shown) to a deinterleaver (not shown).

FIG. 14 is a block diagram of another embodiment of a receiving device for receiving a signal from a transmitting device having a TSTD structure for all channel transmitters. Hence, the receiving device in this embodiment includes a single pilot channel receiver since a pilot channel signal is also time switched for transmission.

In a pilot channel receiver 1410, a PN despreader 1411 multiplies an input signal by a PN sequence, for PN despreading. A multiplier 1413 orthogonally demodulates the signal received from the PN despreader 1411 by multiplying the received signal by the same orthogonal code **W**ₘ as that used in a corresponding pilot channel transmitter. An integrator 141.5 integrates a signal received from the multiplier 1411 for a time T and sums the integrated values. A phase estimator 1417 analyses a signal received from the integrator 1415 and outputs an estimated phase value of a pilot channel signal received through transmission antennas. A time estimator 1419 analyses the signal received from the integrator 1415 and outputs an estimated time value as the transmission time of the pilot channel signal received through the transmission antennas.

A controller 1441 synchronizes to a reference time of the base station and generates a control signal for selecting the outputs of the pilot channel receiver 1410 in a time switching cycle unit. A selector 1443 selectively outputs the estimated phase and time values received from the pilot channel receiver 1410 on the basis of the control signal of the controller 1441.

In a traffic channel receiver 1420, a PN despreader 1421 multiplies an input signal at a time position indicated by the time signal received from the selector 1343 by a PN sequence. That is, the PN despreader 1421 despreads the input signal by the PN code at the estimated switching time position. A multiplier 1423 multiplies the orthogonal code [**W**ₙ] used in a corresponding traffic channel transmitter by a signal received from the PN despreader 1421. An integrator 1425 integrates a signal received from the multiplier 1423 for the time T and sums the integrated values. A phase sign converter 1431 changes the sign of the phase value received from the selector 1443. A multiplier 1427 multiplies the output of the integrator 1425 by the output of the phase sign converter 1431, to synchronize the phase of the input signal. A level decision block 1429 detects the level of a signal received from the multiplier 1427 and changes the signal level to a gray level. The signal output from the level decision block 1429 is fed to a decoder in the receiver.

The receiving device shown in FIG. 14 shows an example where TSTD is executed on a pilot channel as well as traffic channels. Since one orthogonal code is used for the pilot channel, which differs from the receiving device of FIG. 13, all necessary timings and estimated phases can be generated by the use of the single pilot channel receiver 1410 with implementation of the same time switching technique as that for the traffic channel receiver 1420.

TSTD on a forward link in a mobile communication system offers the following effects:
(1) only one traffic channel receiver is needed for demodulating user data regardless of the number N of transmission antennas, since one orthogonal code is available to a user, which enables simplification of a receiver and low power dissipation and low cost of a terminal;
(2) The length of an orthogonal code is not changed because of use of an orthogonal code used in an NTD device. Therefore, there is no increase of an integration interval which is involved in providing time diversity and no degradation of the reception performance possibly caused by a channel environment such as a frequency error;
(3) The number of available transmission antennas is not limited, thereby imposing no constraints on other applications; and
(4) A scrambling effect can be added to improvement in reception performance by applying different switching techniques to users in a base station.

While the present invention has been described in detail with reference to the specific embodiments, they are mere exemplary applications. Thus, it is to be clearly understood that many variations can be made by anyone skilled in the art within the scope of the present invention.

## Claims

1. A transmitting device in a mobile communication system, comprising:
a signal processor (611,613,615,617,619) for generating a modulation signal by multiplying an even-numbered signal with a orthogonal code having a predetermined code length and by multiplying an odd-numbered signal with said orthogonal code having the code length;
at least two antennas, and
RF transmitters as many as antennas, each of the RF transmitters connected to a respective one of the antennas, for converting the signal generated by the signal processor to a RF signal and outputting the RF signal through the respective antenna,
wherein a time switching transmission controller (600,621) switches the transmission signal to one of the RF transmitters in order to perform time switch transmission diversity (TSTD), wherein the switching cycle is integer multiple of the code length.

2. The transmitting device of claim 1, **characterized in that** a plurality of dedicated channel transmitters are provided, each having said at least two antennas, said plurality of RF transmitters, said time switching transmission controller, and said signal generator having a spreader as a dedicated channel spreader for spreading a dedicated channel signal, and a pilot channel transmitter having a symbol distributor for distributing pilot channel symbols to the antennas, a plurality of orthogonal spreaders spreading the distributed symbols by different orthogonal codes, and a plurality of PN spreaders for spreading the orthogonally spread signals by PN codes and outputting the PN spread signals to the RF transmitters.

3. The transmitting device according to claim 1 or 2, **characterized in that** said time switching transmission controller (600,621) comprises:
a controller (600) having switching patterns pre-stored in a look-up table (715) for generating a switch controlling signal based on one of the pre-stored switching patterns at a fixed non-overlapping predetermined switching cycle, and
a switch (621) connected between an output terminal of the spreader (619) and input terminals of the RF transmitters for switching the output of the spreader to a corresponding RF transmitter based on the switch controlling signal.

4. The transmitting device of claim 3, **characterized in that** said controller (600) comprises:
a reference cycle storage (711) for storing a reference switching cycle value; a counter (713) for counting clock pulses of a base station and outputting the counted value based on the reference switching cycle value;
a memory (715) for storing switching patterns and outputting a switching pattern based on the counted value, and
a control signal generator (717) for generating the switch controlling signal according to the switching pattern received from the memory.

5. A transmitting device according to claim 4, **characterized in that** the memory (715) stores at least one of a sequential switching pattern, a random switching pattern, a switching pattern with a uniform switching cycle, and a switching pattern with a variable switching cycle, and the control signal generator (717) generates the switch controlling signal as long as an integer multiple of an orthogonal code length.

6. A channel receiving device in a mobile communication system, comprising:
a pilot channel receiver (1310,1320,1410) for despreading a pilot channel from an input signal and estimating phase and time values, **characterized by**
a reception controller (1341,1343) for selecting the estimated phase and time values according to a switching cycle, which is an integer multiple of an orthogonal code length, and pattern of a time switching transmission diversity (TSTD) signal received from at least two antennas of a base station, and a traffic channel receiver (1330) for receiving the TSTD signal from the base station, detecting a channel signal based on the estimated time value, and correcting a phase error of the detected channel signal based on the estimated phase value, for demodulation.

7. The channel receiving device according to claim 6, **characterized by** a plurality of said pilot channel receivers for receiving Orthogonal Transmission Diversity (OTD) pilot signals through at least two antennas, wherein said traffic channel receiver receives the TSTD signals from the base station through said at least two antennas and said reception controller selects estimated time and phase values according to the switching cycle and pattern of said TSTD signals.

8. The channel receiving device according to claim 6 or 7, wherein the traffic channel receiver (1330) comprises:
a PN despreader (1331) for PN-despreading the input signal at a time position indicated by the estimated time value;
an orthogonal despreader (1333) for depreading the PN-despread signal by a corresponding channel orthogonal code, and
a demodulator (1337,1345) for correcting a phase error of the orthogonal despread signal based on the estimated phase value.

9. A channel signal transmitting method in a mobile communication system, comprising the steps of:
generating a modulation signal by multiplying an even-numbered signal with a orthogonal code having a predetermined code length and by multiplying an odd-numbered signal with said orthogonal code having the code length;
switching the modulation signal to a first RF transmitter connected to a first antenna or a second RF transmitter connected to a second antenna with non-overlapping time intervals;
converting the modulation signal to a radio frequency (RF) signal to transmit the RF signal through one of the antennas, wherein a cycle of the switching is multiple integer of the code length.

10. The transmitting method of claim 9, wherein generating the modulation signal comprises spreading a transmit signal by corresponding orthogonal code for dedicated channel, and spreading the orthogonally spread signal by a PN code, and generating a TSTD signal in a non-overlapped time period according to a switching pattern pre-stored in a look-up table, wherein the TSTD signal generating step comprises the substeps of:
generating a switch controlling signal based on one of the pre-stored switching patterns, and
switching the PN-spread signal to a corresponding transmission antenna based on the switch controlling signal.

11. The transmitting method of claim 10, wherein the switch controlling step comprises the substeps of:
generating a reference switching cycle signal;
counting clock pulses of a base station and outputting the counted value at the time point when the reference switching cycle value is generated;
outputting a switching pattern based on the counted value; and
generating the switch controlling signal according to the switching pattern.

12. The transmitting method of claim 11, wherein the switching pattern is at least one of a sequential switching pattern, a random switching pattern, a switching pattern with a uniform switching cycle, and a switching pattern with a variable switching cycle, and the switch controlling signal is an integer multiple of an orthogonal code length.

13. A channel signal receiving method in a mobile communication system, comprising the step of:
despreading a pilot channel signal from an input signal and estimating phase and time values, **characterized by** the further steps of
selecting the estimated phase and time values according to the switching cycle which is an integer multiple of an orthogonal code length, and pattern of a TSTD signal received from at least two antennas of a base station, and
detecting a TSTD dedicated channel signal based on the estimated time value, and correcting a phase error of the detected signal based on the estimated phase value, for demodulation.

14. The channel signal receiving method according to claim 13, wherein a detecting step comprises the substeps of:
PN-despreading the input signal at a time position indicated by the estimated time value;
depreading the PN-despread signal by a corresponding dedicated channel orthogonal code, and
correcting a phase error of the orthogonal despread signal based on the estimated phase value.

## Patentansprüche

1. Sendevorrichtung in einem mobilen Kommunikationssystem, die umfasst:
einen Signalprozessor (611, 613, 615, 617, 619), der ein Modulationssignal durch Multiplizieren eines geradzahlig nummerierten Signals mit einem eine vorbestimmte Codelänge aufweisenden Orthogonalcode und durch Multiplizieren eines ungeradzahlig nummerierten Signals mit dem die Codelänge aufweisenden Orthogonalcode erzeugt;
wenigstens zwei Antennen, und
HF-Sender so viele wie Antennen, wobei jeder der HF-Sender mit einer jeweiligen der Antennen verbunden ist, um das von dem Signalprozessor erzeugte Signal in ein HF-Signal umzusetzen und das HF-Signal über die jeweilige Antenne auszugeben,
wobei eine Zeitschaltungssendesteuereinheit (600, 621) das Sendesignal auf einen der HF-Sender schaltet, um eine Zeitschaltungssendediversity (TSTD) durchzuführen, wobei der Schaltzyklus ein ganzzahliges Vielfaches der Codelänge ist.

2. Sendevorrichtung nach Anspruch 1, **dadurch gekennzeichnet, dass** eine Mehrzahl von zugeordneten Kanalsendern vorgesehen ist, von denen jeder aufweist: die wenigstens zwei Antennen, die Mehrzahl von HF-Sendern, die Zeitschaltungssendesteuereinheit und den Signalerzeuger mit einem Spreizer als zugeordnetem Kanalzerstreuer, der ein zugeordnetes Kanalsignal spreizt, und einen Pilotkanalsender mit einem Symbolverteiler, der Pilotkanalsymbole an die Antennen verteilt, eine Mehrzahl von Orthogonalzerstreuern, die die verteilten Symbole durch verschiedene Orthogonalcodes spreizen, und eine Mehrzahl von PN-Spreizern, die die orthogonal gespreizten Signale durch PN-Codes spreizen und die PN-gespreizten Signale an die HF-Sender ausgeben.

3. Sendevorrichtung nach Anspruch 1 oder 2, **dadurch gekennzeichnet dass** die Zeitschaltungssendesteuereinheit (600, 621) umfasst:
eine Steuereinheit (600) mit Schaltmustern, die in einer Nachschlagtabelle (715) vorab gespeichert sind, um ein Schaltersteuerungssignal auf der Basis von einem der vorab gespeicherten Schaltmuster in einem festen, nicht überlappenden, vorbestimmten Schaltzyklus zu erzeugen, und
einen Schalter (621), der zwischen einen Ausgangsanschluss des Spreizers (619) und Eingangsanschlüsse der HF-Sender geschaltet ist und den Ausgang des Spreizers auf der Basis des Schaltersteuerungssignals auf einen entsprechenden HF-Sender schaltet.

4. Sendevorrichtung nach Anspruch 3, **dadurch gekennzeichnet, dass** die Steuereinheit (600) umfasst:
einen Bezugszyklusspeicher (711), der einen Bezugsschaltzykluswert speichert;
einen Zähler (713), der Taktimpulse einer Basisstation zählt und den gezählten Wert auf der Basis des Bezugsschaltzykluswertes ausgibt;
einen Speicher (715), der Schaltmuster speichert und ein Schaltmuster auf der Basis des gezählten Wertes ausgibt, und
einen Steuersignalerzeuger (717), der das Schaltersteuerungssignal gemäß dem von dem Speicher empfangenen Schaltmuster erzeugt.

5. Sendevorrichtung nach Anspruch 4, **dadurch gekennzeichnet, dass** der Speicher (715) wenigstens eines von einem sequenziellen Schaltmuster, einem zufälligen Schaltmuster, einem Schaltmuster mit einem gleichmäßigen Schaltzyklus und einem Schaltmuster mit einem veränderlichen Schaltzyklus speichert und der Steuersignalerzeuger (717) das Schaltersteuerungssignal so lang wie ein ganzzahliges Vielfaches einer Orthogonalcodelänge erzeugt.

6. Kanalempfangsvorrichtung in einem mobilen Kommunikationssystem, die umfasst:
einen Pilotkanalempfänger (1310, 1320, 1410), der ein Pilotkanalsignal aus einem Eingangssignal entspreizt und Phasen- und Zeitwerte schätzt, **gekennzeichnet durch**
eine Empfangssteuereinheit (1341, 1343), die die geschätzten Phasen- und Zeitwerte gemäß einem Schaltzyklus, der ein ganzzahliges Vielfaches einer Orthogonalcodelänge ist, und Muster eines über wenigstens zwei Antennen einer Basisstation empfangenen TSTD-Signals (Zeitschaltungssendediversity TSTD) auswählt, und
einen Verkehrskanalempfänger (1330), der das TSTD-Signal von der Basisstation empfängt, ein Kanalsignal auf der Basis des geschätzten Zeitwertes ermittelt und einen Phasenfehler des ermittelten Kanalsignals auf der Basis des geschätzten Phasenwertes zur Demodulation korrigiert.

7. Kanalempfangsvorrichtung nach Anspruch 6, **gekennzeichnet durch** eine Mehrzahl der Pilotkanalempfänger, die OTD-Pilotsignale (Orthogonalsendediversity OTD) über wenigstens zwei Antennen empfangen, wobei der Verkehrskanalempfänger die TSTD-Signale von der Basisstation über die wenigstens zwei Antennen empfängt und die Empfangssteuereinheit geschätzte Zeit- und Phasenwerte gemäß dem Schaltzyklus und Muster der TSTD-Signale auswählt.

8. Kanalempfangsvorrichtung nach Anspruch 6 oder 7, wobei der Verkehrskanalempfänger (1330) umfasst:
einen PN-Entspreizer (1331), der das Eingangssignal in einer durch den geschätzten Zeitwert angegebenen Zeitposition PN-entspreizt;
einen Orthogonalentstreuer (1333), der das PN-entspreizt Signal durch einen entsprechenden Kanalorthogonalcode entspreiztt, und
einen Demodulator (1337, 1345), der einen Phasenfehler des orthogonal entspreizten Signals auf der Basis des geschätzten Phasenwertes korrigiert.

9. Kanalsignalsendeverfahren in einem mobilen Kommunikationssystem, das die nachfolgenden Schritte umfasst:
Erzeugen eines Modulationssignals durch Multiplizieren eines geradzahlig nummerierten Signals mit einem eine vorbestimmte Codelänge aufweisenden Orthogonalcode und durch Multiplizieren eines ungeradzahlig nummerierten Signals mit dem die Codelänge aufweisenden Orthogonalcode;
Schalten des Modulationssignals auf einen ersten HF-Sender, der mit einer ersten Antenne verbunden ist, oder einen zweiten HF-Sender, der mit einer zweiten Antenne verbunden ist, mit nicht überlappenden Zeitintervallen;
Umsetzen des Modulationssignals auf ein HF-Signal (Hochfrequenz HF), um das HF-Signal über eine der Antennen zu senden, wobei ein Zyklus des Schaltens ein ganzzahliges Vielfaches der Codelänge ist.

10. Sendeverfahren nach Anspruch 9, wobei das Erzeugen des Modulationssignals umfasst: Spreizen eines Sendesignals durch entsprechenden Orthogonalcode für einen zugeordneten Kanal und Zerstreuen des orthogonal gespreizten Signals durch einen PN-Code und Erzeugen eines TSTD-Signals in einer nicht überlappten Zeitperiode gemäß einem Schaltmuster, das in einer Nachschlagtabelle vorab gespeichert ist, wobei der TSTD-Signalerzeugungsschritt die nachfolgenden Unterschritte umfasst:
Erzeugen eines Schaltersteuerungssignals auf der Basis von einem der vorab gespeicherten Schaltmuster, und
Schalten des PN-gespreizten Signals auf eine entsprechende Sendeantenne auf der Basis des Schaltersteuerungssignals.

11. Sendeverfahren nach Anspruch 10, wobei der Schaltersteuerungsschritt die nachfolgenden Unterschritte umfasst:
Erzeugen eines Bezugsschaltzyklussignals;
Zählen von Taktimpulsen einer Basisstation und Ausgeben des gezählten Wertes zu dem Zeitpunkt, zu dem der Bezugsschaltzykluswert erzeugt wird;
Ausgeben eines Schaltmusters auf der Basis des gezählten Wertes; und
Erzeugen des Schaltersteuerungssignals gemäß dem Schaltmuster.

12. Sendeverfahren nach Anspruch 11, wobei das Schaltmuster wenigstens eines von einem sequenziellen Schaltmuster, einem zufälligen Schaltmuster, einem Schaltmuster mit einem gleichmäßigen Schaltzyklus und einem Schaltmuster mit einem veränderlichen Schaltzyklus ist und das Schaltersteuerungssignal ein ganzzahliges Vielfaches einer Orthogonalcodelänge ist.

13. Kanalsignalempfangsverfahren in einem mobilen Kommunikationssystem, das die nachfolgenden Schritte umfasst:
Spreizen eines Pilotkanalsignals aus einem Eingangssignal und Schätzen von Phasen- und Zeitwerten, **gekennzeichnet durch** die nachfolgenden weiteren Schritte:
Auswählen der geschätzten Phasen- und Zeitwerte gemäß dem Schaltzyklus, der ein ganzzahliges Vielfaches einer Orthogonalcodelänge ist, und Muster eines TSTD-Signals, das von wenigstens zwei Antennen einer Basisstation empfangen wird, und
Ermitteln eines TSTD-zugeordneten Kanalsignals auf der Basis des geschätzten Zeitwertes, und
Korrigieren eines Phasenfehlers des ermittelten Signals auf der Basis des geschätzten Phasenwertes zur Demodulation.

14. Kanalsignalempfangsverfahren nach Anspruch 13, wobei ein Ermittlungsschritt die nachfolgenden Unterschritte umfasst:
PN-Spreizen des Eingangssignals in einer durch den geschätzten Zeitwert angegebenen Zeitposition;
Spreizen des PN-gespreizten Signals durch einen entsprechenden zugeordneten Kanalorthogonalcode, und
Korrigieren eines Phasenfehlers des orthogonalen gespreizten Signals auf der Basis des geschätzten Phasenwertes.

## Revendications

1. Dispositif d'émission dans un système de communication mobile, comportant :
un processeur de signaux (611, 613, 615, 617, 619) destiné à générer un signal de modulation en multipliant un signal de numéro pair avec un code orthogonal ayant une longueur de code prédéterminée et en multipliant un signal de numéro impair avec ledit code orthogonal ayant la longueur de code ;
au moins deux antennes, et
des émetteurs RF aussi nombreux que les antennes, chacun des émetteurs RF étant connecté à l'une, respective, des antennes, pour convertir le signal généré par le processeur de signaux en un signal RF et délivrer en sortie le signal RF par l'intermédiaire de l'antenne respective,
dans lequel une unité (600, 621) de commande d'émission à commutation de temps commute le signal d'émission sur l'un des émetteurs RF afin d'effectuer une diversité d'émission à commutation de temps (TSTD), dans laquelle le cycle de commutation est un multiple entier de la longueur de code.

2. Dispositif d'émission selon la revendication 1, **caractérisé en ce que** plusieurs émetteurs à canaux dédiés sont prévus, ayant chacun lesdites au moins deux antennes, lesdits plusieurs émetteurs RF, ladite unité de commande d'émission à commutation de temps et ledit générateur de signaux ayant un étaleur en tant qu'étaleur de canal dédié destiné à étaler un signal de canal dédié, et un émetteur de canal pilote ayant un distributeur de symboles destiné à distribuer des symboles de canal pilote aux antennes, plusieurs étaleurs orthogonaux étalant les symboles distribués par différents codes orthogonaux, et plusieurs étaleurs PN destinés à étaler les signaux étalés orthogonalement par des codes PN et à délivrer en sortie les signaux étalés PN aux émetteurs RF.

3. Dispositif d'émission selon la revendication 1 ou 2, **caractérisé en ce que** ladite unité (600, 621) de commande d'émission à commutation de temps comporté :
une unité (600) de commande ayant des combinaisons de commutation préalablement stockées dans une table à consultation (715) pour la génération d'un signal de commande de commutation basé sur l'une des combinaisons de commutation préalablement stockées à un cycle de commutation prédéterminé fixe, non chevauchant, et
un commutateur (621) connecté entre une borne de sortie d'étaleur (619) et des bornes d'entrée des émetteurs RF pour commuter le signal de sortie d'étaleur sur un émetteur RF correspondant sur la base du signal de commande de commutation.

4. Dispositif d'émission selon la revendication 3, **caractérisé en ce que** ladite unité de commande (600) comporte :
une unité (711) de stockage de cycle de référence destiné à stocker une valeur de cycle de commutation de référence ;
un compteur (713) destiné à compter des impulsions d'horloge d'une station de base et à délivrer en sortie la valeur comptée basée sur la valeur du cycle de commutation de référence ;
une mémoire (715) destinée à stocker des combinaisons de commutation et à délivrer en sortie une combinaison de commutation basée sur la valeur comptée, et
un générateur (717) de signal de commande destiné à générer le signal de commande de commutation en fonction de la combinaison de commutation reçue de la mémoire.

5. Dispositif d'émission selon la revendication 4, **caractérisé en ce que** la mémoire (715) stocke au moins l'une d'une combinaison de commutation séquentielle, d'une combinaison de commutation aléatoire, d'une combinaison de commutation ayant un cycle de commutation uniforme, et d'une combinaison de commutation ayant un cycle de commutation variable, et le générateur (717) de signal de commande génère le signal de commande de commutation d'une longueur égale à un multiple entier d'une longueur de code orthogonal.

6. Dispositif de réception de canal dans un système de commutation mobile, comportant :
un récepteur (1310, 1320, 1410) de canal pilote destiné à désétaler un canal pilote à partir d'un signal d'entrée et à estimer des valeurs de phase et de temps, **caractérisé par**
une unité (1341, 1343) de commande de réception destinée à sélectionner les valeurs estimées de phase et de temps conformément à un cycle de commutation, qui est un multiple entier d'une longueur de code orthogonal, et une combinaison d'un signal de diversité d'émission à commutation de temps (TSTD) reçu d'au moins deux antennes d'une station de base, et
un récepteur (1330) de canal de trafic destiné à recevoir le signal TSTD provenant de la station de base, à détecter un signal de canal basé sur la valeur de temps estimée et à corriger une erreur de phase du signal de canal détecté basé sur la valeur de phase estimée, pour une démodulation.

7. Dispositif de réception de canal selon la revendication 6, **caractérisé par** plusieurs desdits récepteurs de canaux pilotes destinés à recevoir des signaux pilotes de diversité d'émission orthogonale (OTD) par l'intermédiaire d'au moins deux antennes, dans lequel ledit récepteur de canal de trafic reçoit les signaux TSTD provenant de la station de base par l'intermédiaire desdites au moins deux antennes, et ladite unité de commande de réception sélectionne des valeurs estimées de temps et de phase conformément aux cycle et combinaison de commutation desdits signaux TSTD.

8. Dispositif de réception de canal selon la revendication 6 ou 7, dans lequel le récepteur (1330) de canal de trafic comporte :
un désétaleur PN (1331) destiné à appliquer un désétalement PN au signal d'entrée en une position dans le temps indiquée par la valeur de temps estimée ;
un désétaleur orthogonal (1333) destiné à désétaler le signal ayant subi le désétalement PN par un code orthogonal de canal correspondant, et
un démodulateur (1337, 1345) destiné à corriger une erreur de phase du signal désétalé orthogonal sur la base de la valeur de phase estimée.

9. Procédé d'émission de signal de canal dans un système de communication mobile, comprenant les étapes qui consistent :
à générer un signal de modulation en multipliant un signal de numéro pair avec un code orthogonal ayant une longueur de code prédéterminée et en multipliant un signal de numéro impair avec ledit code orthogonal ayant la longueur de code ;
à commuter le signal de modulation sur un premier émetteur RF connecté à une première antenne ou un second émetteur RF connecté à une seconde antenne avec des intervalles de temps non chevauchants ;
à convertir le signal de modulation en un signal radiofréquence (RF) pour émettre le signal RF par l'intermédiaire de l'une des antennes, un cycle de la commutation étant un multiple entier de la longueur de code.

10. Procédé d'émission selon la revendication 9, dans lequel la génération du signal de modulation comprend l'étalement d'un signal d'émission par un code orthogonal correspondant pour un canal dédié, et l'étalement du signal étalé orthogonalement par un code PN, et la génération d'un signal TSTD dans une période de temps non chevauchée conformément à une combinaison de commutation préalablement stockée dans une table à consultation, l'étape de génération du signal TSTD comprenant les sous-étapes qui consistent :
à générer un signal de commande de commutation basé sur l'une des combinaisons de commutation préalablement stockées, et
à commuter le signal étalé PN sur une antenne d'émission correspondante sur la base du signal de commande de commutation.

11. Procédé d'émission selon la revendication 10, dans lequel l'étape de commande de commutation comprend les sous-étapes qui consistent :
à générer un signal de cycle de commutation de référence ;
à compter des impulsions d'horloge d'une station de base et à délivrer en sortie la valeur comptée à l'instant où la valeur de cycle de commutation de référence est générée ;
à délivrer en sortie une combinaison de commutation basée sur la valeur comptée ; et
à générer le signal de commande de commutation conformément à la combinaison de commutation.

12. Procédé d'émission selon la revendication 11, dans lequel la combinaison de commutation est au moins l'une d'une combinaison de commutation séquentielle, d'une combinaison de commutation aléatoire, d'une combinaison de commutation ayant un cycle de commutation uniforme et d'une combinaison de commutation ayant un cycle de commutation variable, et le signal de commande de commutation est un multiple entier d'une longueur de code orthogonal.

13. Procédé de réception de signal de canal dans un système de communication mobile, comprenant l'étape consistant :
à désétaler un signal de canal pilote à partir d'un signal d'entrée et à estimer des valeurs de phase et de temps, **caractérisé par** les autres étapes qui consistent
à sélectionner les valeurs estimées de phase et de temps conformément au cycle de commutation qui est un multiple entier d'une longueur de code orthogonal, et à une combinaison d'un signal TSTD reçu d'au moins deux antennes d'une station de base, et
à détecter un signal de canal dédié TSTD basé sur la valeur de temps estimée, et
à corriger une erreur de phase du signal détecté basé sur la valeur de phase estimée, pour une démodulation.

14. Procédé de réception de signal de canal selon la revendication 13, dans lequel une étape de détection comprend les sous-étapes qui consistent :
à soumettre à un désétalement PN le signal d'entrée par une position temporelle indiquée par la valeur de temps estimée ;
à désétaler le signal désétalé PN par un code orthogonal de canal dédié correspondant, et
à corriger une erreur de phase du signal désétalé orthogonal sur la base de la valeur de phase estimée.
